# EUROPEAN PATENT SPECIFICATION

(11) **EP 2 661 064 B1**
(45) Date of publication and mention of the grant of the patent: **27.02.2019**
(21) Application number: 13166171.2
(22) Date of filing: 02.05.2013
(51) Int. Cl.: H04M 1/725, H04B 10/116, G06F 3/14, G06F 13/40, G06F 13/38, H04M 1/60, G06F 3/06

(54) **Method for identifying universal serial bus host, and electronic device thereof**
Verfahren zur Identifizierung von seriellen Universal-Bus-Hosts, und elektronische Vorrichtung dafür
Procédé d'identification d'hôte de bus série universel et son dispositif électronique

(30) Priority: 02.05.2012 KR 20120046398
(43) Date of publication of application: 06.11.2013
(73) Proprietor: Samsung Electronics Co., Ltd., Gyeonggi-do 443-742 (KR)
(72) Inventor: Cho, Soon-Yong, Gyeonggi-do (KR)
(74) Representative: Nederlandsch Octrooibureau

(56) References cited:
- EP-A2- 2 182 709
- WO-A1-2007/122453
- US-A1- 2008 276 009
- "UNIVERSAL SERIAL BUS SPECIFICATION REVISION 2.0", UNIVERSAL SERIAL BUS SPECIFICATION,, no. REV. 2.0, 27 April 2000 (2000-04-27), pages 1-622, XP001544046,
- "Universal Serial Bus Communications Class Subclass Specifications for Network Control Model Devices", , 24 November 2010 (2010-11-24), XP055213218, Retrieved from the Internet: URL:http://www.usb.org/developers/docs/dev class_docs/ [retrieved on 2015-09-14]
- BALDEN ET AL: "USB RNDIS/CDC White Paper", INTERNET CITATION, 15 January 2003 (2003-01-15), XP002389884, Retrieved from the Internet: URL:http://www.belcarra.com/rndis/blcarra_ usb_rndis.htm [retrieved on 2006-07-12]

## Description

### BACKGROUND OF THE INVENTION

### 1. Field of the Invention:

The present invention relates to a service based on Universal Serial Bus (USB) connection.

### 2. Description of the Related Art:

The USB has been developed as one of the standards for connecting a peripheral device to a computer. However, the USB is so widely used that the use of the USB has evolved from merely connecting a peripheral device to a computer to include connecting a portable terminal such as a smart phone to a computer or any other host device.

In general, in order to connect an electronic device to a specific host device through the USB and to provide a selective service suitable for the host device, it is necessary to perform a process of presetting the electronic device to a mode corresponding to the host device before the connection of the electronic device to the host device or to change a previous service for the host device connection. The need for a user to convert the mode of the host device before connection of the electronic device may inconvenience a user. In addition, the user may be further inconvenienced when various host devices are present.

Therefore, a need exists for an apparatus, system, and method for identifying a USB host.

The above information is presented as background information only to assist with an understanding of the present disclosure. No determination has been made, and no assertion is made, as to whether any of the above might be applicable as prior art with regard to the present invention.
WO 2007/122453 discloses a host device wherein in the case of a USB connection, the host detects a connection of a peripheral to the host via a USB interface of the USB interface to the peripheral. The peripheral receives the informative command and may for instance evaluate the included information for selecting a suitable USB mode that is to be entered or for deciding on becoming a host itself. Alternatively or in addition, the host may generate a request command for retrieving information on all classes offered in all USB modes of a peripheral.

### SUMMARY OF THE INVENTION

host. The host then generates an informative command, which includes information on capabilities of the host. This informative command is provided for transmission via the USB interface to the peripheral. The peripheral receives the informative command and may for instance evaluate the included information for selecting a suitable USB mode that is to be entered or for deciding on becoming a host itself. Alternatively or in addition, the host may generate a request command for retrieving information on all classes offered in all USB modes of a peripheral.

### SUMMARY OF THE INVENTION

Aspects of the present invention are to address at least the above problems and/or disadvantages and to provide at least the advantages below. Accordingly, an aspect of the present invention is to provide a method as specified in claims 1 and 9 respectively.
Advantageous embodiments are specified in the dependent claims.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings in which:
FIG. 1 is a diagram illustrating an electronic device and host devices according to an exemplary embodiment of the present invention;
FIG. 2 is a diagram illustrating a specific example of an electronic device and host devices according to an exemplary embodiment of the present invention;
FIG. 3 is a diagram illustrating a Universal Serial Bus (USB) enumerating process according to an exemplary embodiment of the present invention;
FIG. 4 is a diagram illustrating a functional block configuration of an electronic device according to an exemplary embodiment of the present invention;
FIG. 5 is a diagram illustrating a USB connection-based service providing process according to an exemplary embodiment of the present invention;
FIG. 6 is a diagram illustrating a method for identifying a head unit according to an exemplary embodiment of the present invention;
FIG. 7 is a diagram illustrating a method for dynamically providing a single-configuration and a multi-configuration according to an exemplary embodiment of the present invention;
FIG. 8 is a diagram illustrating a process for identifying a head unit according to an exemplary embodiment of the present invention;
FIG. 9 is a diagram illustrating a process for converting between a multi-configuration and a single-configuration according to an exemplary embodiment of the present invention; and
FIG. 10 is a diagram illustrating a block configuration of an electronic device according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims. It includes various specific details to assist in that understanding but these are to be regarded as merely exemplary. Accordingly, those of ordinary skill in the art will recognize that various changes and modifications of the embodiments described herein can be made without departing from the scope of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims.

It is to be understood that the singular forms "a," "an," and "the" include plural referents unless the context clearly dictates otherwise. Thus, for example, reference to "a component surface" includes reference to one or more of such surfaces.

The present invention relates to an apparatus and a method for identifying a USB host.

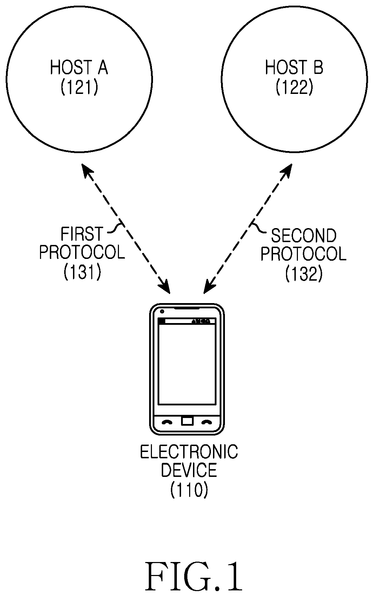

FIG. 1 illustrates an electronic device and host devices according to an exemplary embodiment of the present invention.

Referring to FIG. 1, an electronic device 110 may be connected to the two host devices 121 and 122 (e.g., host device A 121 and host device B 122) through a Universal Serial Bus (USB).

The electronic device 110 is a device having the capability to connect to at least one of various communication networks such as a mobile communication network and an Internet Protocol (IP) network. The electronic device 110 may be a portable electronic device, and may be one of a smart phone, a portable terminal, a mobile phone, a mobile pad, a media player, a tablet computer, a handheld computer, a Personal Digital Assistant (PDA), and the like.

The host devices 121 and 122 are different types of devices, and may be connected through a USB interface to other devices, particularly, to the electronic device 110. The host devices 121 and 122 may receive a network service through the electronic device 10. The network service is a service that enables the host devices 121 and 122 to receive data communication by accessing a mobile communication network through the network access capability of the electronic device 110. The network service may be referred to as a tethering service. As an example, in this case, the electronic device 110 function as a network card in the host devices 121 and 122.

In receiving the network service, the host devices 121 and 122 use different protocols 131 and 132 (e.g., a first protocol 131 and a second protocol 132). Thus, the protocol to be used to provide the network service should be applied differently depending on to which of the host devices 121 and 122 the electronic device 110 is connected.

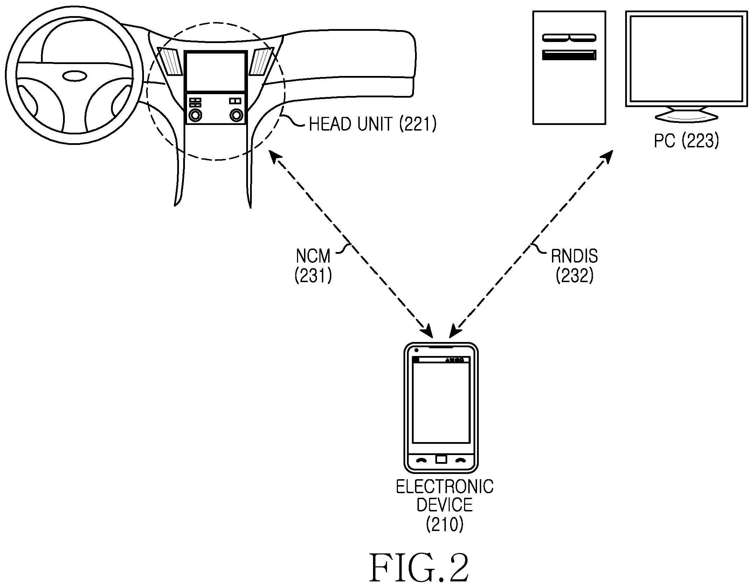

A specific example of the environment for supporting different protocols according to host devices as illustrated in FIG. 1 is illustrated in FIG. 2.

FIG. 2 is a diagram illustrating a specific example of an electronic device and host devices according to an exemplary embodiment of the present invention.

Referring to FIG. 2, two host devices may include a head unit 221 of a vehicle and a Personal Computer (PC) 223. The head unit 221 is provided for driver's convenience at a dash board located in front of a driver's seat of a vehicle, and includes supplementary equipment such as a car audio, a navigator, and the like. As vehicle equipment is digitalized and the use of an electronic device 210 such as a portable phone or a smart phone is popularized, interworking service between the head unit 221 and the electronic device 210 are being developed. For example, the electronic device 210 may output video or audio through the hardware of the head unit 221, a user may control the head unit 221 through the electronic device 210, or the head unit 221 may receive a service using the hardware of the electronic device 210. Accordingly, the head unit 221 may interwork with other devices through various schemes such as USB connection.

According to an exemplary embodiment of the present invention, the electronic device 210 may provide a service to the head unit 221 and the PC 223 through USB connection. In this case, as illustrated in FIG. 2, a Network Control Model (NCM) protocol 231 is used as an Ethernet link driver between the head unit 221 and the electronic device 210, and a Remote Network Driver Interface Specification (RNDIS) protocol 232 is used as an Ethernet link driver between the PC 220 and the electronic device 210. The NCM 231 and the RNDIS 232 are Ethernet link drivers for a network service. The NCM 231 is one of the USB class standards of Ethernet on the USB. The RNDIS 232 is used for network devices used in dynamic Plug and Play Input/Output (I/O) such as USB. The RNDIS 232 is not a standardized protocol, and is supported in some Operating Systems (OSs) (e.g., Windows™ and Android™).

Because electronic devices having an Android platform currently widely used are designed to fixedly use the RNDIS 232 for a network service such as a tethering service, such electronic devices cannot provide a network service to the head unit 221 of a vehicle. In order to provide a network service to the head unit 221, a separate dedicated mode supporting the NCM 231 should be defined, or an Ethernet protocol for the tethering service should be replaced with the NCM 231 instead of the RNDIS 232.

Thus, although supporting the RNDIS 232 protocol for connection with the PC 223, the electronic device 210 according to an exemplary embodiment of the present invention may dynamically provide the NCM 231 protocol in order to provide for the case of being connected to the head unit 221. To this end, the electronic device 210 has the capability to identify whether the USB-connected host is the head unit 221 or the PC 223. In addition, the PC 223 may flexibly provide for various requirements on the PC 223 by dynamically providing a single-configuration and a multi-configuration according to a USB mode when connecting with the PC 223.

When a host such as the PC 223 and the head unit 221 is connected to other devices through the USB, the host establishes a state of being able to receive a service from the other devices through a USB enumeration process. The USB enumeration process includes connection recognition, signal path setup, detection of a function providable in a device, and driver operation.

The USB enumeration process is performed without being recognized by the user, except for the case of detecting a new device and informing the user as to whether the new device is successfully set up. However, in some cases, for example, when the device is initially connected to the host, the user needs to designate a specific path so that the host can find a deriver file. When the host uses a Windows OS, the Windows OS adds a new device to a device manager in a control panel, and when the user removes the device, the Windows OS removes the device. The USB enumeration process will be briefly described below.

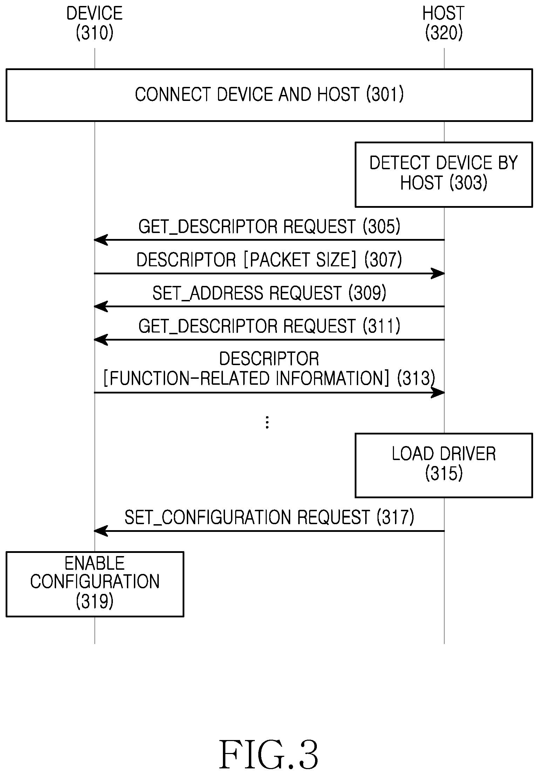

FIG. 3 is a diagram illustrating a USB enumerating process according to an example, not part of the present invention.

Referring to FIG. 3, a device 310 may be the electronic device 210 of FIG. 2, and a host 320 may be the head unit 221 or the PC 222 of FIG. 2.

Referring to FIG. 3, in step 301, a USB enumeration process starts when a user connects the device 310 to a USB port of the host 320 or when the host 320 is turned on with the device 310 connected thereto. The USB port may be located at a root hub of the host 320 or a hub connected to a downstream from the host 320.

In step 303, the host 320 detects the device 310 and establishes a state of being able to exchange signals. Specifically, the host 320 recognizes a connection with the device 310 through the hub, determines whether the device 310 is in low-speed or high-speed operation, and sets a signal path between the device 310 and a bus.

In step 305, the host 320 transmits a request for getting a descriptor. The request for getting a descriptor may be referred to as 'Get_Descriptor'. Accordingly, the host 320 determines a maximum packet size of a default pipe. Because the host 320 performs a USB enumeration process with one device at a time, the host 320 transmits the request to an endpoint # 0 of a device with an address 0. Even when a plurality of devices are simultaneously connected to the bus, only the device allocated an address 0 responds to communication. Accordingly, in step 307, the device 310 transmits a descriptor including the maximum packet size.

In step 309, the host 320 allocates an address to the device 310. To this end, the host 320 transmits a request for setting an address. The request for setting an address may be referred to as 'Set_Address'. Accordingly, the device 310 operates with a new address. Subsequent communication is performed using the new address. The new address is available until the removal, port resetting, or system rebooting of the device 310.

In step 311, the host 320 checks (e.g., analyzes) information about a function providable in the device 310. To this end, the host 320 transmits a request for getting a descriptor. The request for getting a descriptor may be referred to as 'Get_Descriptor'. Accordingly, in step 313, the device 310 transmits a descriptor including the providable function. In this step, the host 320 receives all descriptors of the device 310. The descriptor is a data structure including the maximum packet size, the number of configurations provided by the device 310, and basic information about the device 310.

Although not illustrated in FIG. 3, the host 320 may continuously check (e.g., analyze) information about the device 310 by requesting one or more configuration descriptors specified in the descriptor of the device 310. The request for a configuration descriptor includes a request for all lower descriptors subsequent to the configuration descriptor. The host 320 may start checking (e.g., analyzing) the descriptors by requesting a configuration descriptor length and a 9-byte configuration descriptor including lower descriptors. Accordingly, the host 320 again requests a configuration descriptor with a total descriptor length checked through the configuration descriptor. The device 310 responds by transmitting descriptors about the interfaces of the device 310 together with endpoint descriptors following an interface descriptor. Some configurations may include a class or vendor-specific descriptor obtained by extending and modifying other descriptors.

In step 315, the host 320 determines and loads a driver of the device 310. After checking (e.g., analyzing) information about the device 310 through the descriptor, the host 320 searches for an optimal driver of the device 310 for communication with the device 310. In determining the driver, the host 320 may use INF file information, a vendor ID of the device 310, a product ID, a release number, a class, a subclass, a protocol value, a system registry, or the like.

In step 317, the host 320 selects a configuration. Upon acquiring the information about the device 310 through the descriptor, the host 320 transmits a request for configuration settings including a desired configuration number. The request for configuration settings may be referred to as 'Set_Configuration'. The device 310 may support only one configuration, or may support a plurality of configurations. When the device 310 supports a plurality of configurations, based on information about how the device 310 is used, the host 320 may determine which configuration to request, inquire of the user which operation to perform, or select a configuration with a predetermined number.

In step 319, the device 310 enables the relevant configuration at the request of the host 320. Accordingly, the device 310 is configured, and the interfaces of the device 310 are enabled. For example, the device 310 may provide the relevant function to the host 320.

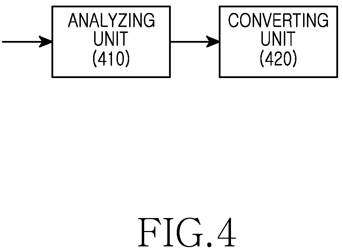

FIG. 4 is a diagram illustrating a functional block configuration of an electronic device as an example not part of the present invention.

Referring to FIG. 4, the electronic device includes an analyzing unit 410 and a converting unit 420.

The analyzing unit 410 analyzes a packet received during the USB enumeration process, and uses the analysis result to determine whether the host is a head unit. The USB enumeration process is a process of recognizing a device to which the USB host is connected through the USB, finding which function can be provided from the device, and determining and notifying which function to be received from the device. For example, whether the host is the head unit can be determined through a vendor-specific request. Then, the analyzing unit 410 analyzes a configuration request received from a PC.

The converting unit 420 performs an operation corresponding to the configuration request from the PC according to whether the host determined by the analyzing unit 410 is a head unit. Specifically, the converting unit 420 generates information about functions providable to the host according to whether the host is a head unit. For example, the converting unit 420 generates descriptor response information for each USB mode, and converts an interface according to the configuration request. Also, the converting unit 420 dynamically binds a function suitable for the relevant host according to the connected host.

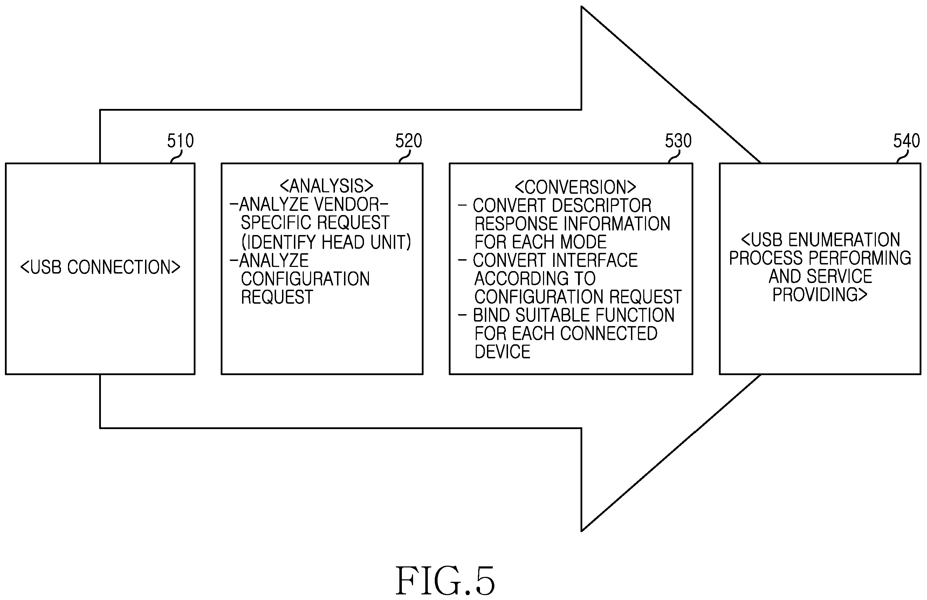

FIG. 5 is a diagram illustrating a USB connection-based service providing process according to an example not part of the present invention.

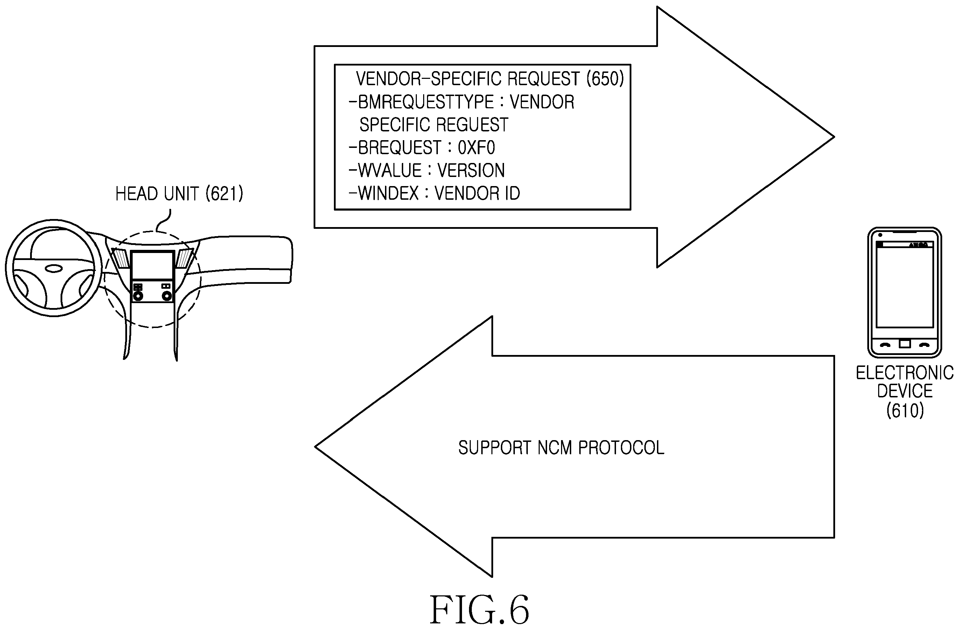

Referring to FIG. 5, a service providing process includes USB connection 510, analysis 520, conversion 530, and USB enumeration process performing and service providing 540 in the order named. In the step of analysis 520, an electronic device analyzes a vendor-specific request. The vendor-specific request is a USB device control request that is received only when a host is a head unit. The vendor-specific request may be received during or after the USB enumeration process. Thus, when receiving the vendor-specific request, the electronic device may determine that the host is the head unit. The determination of whether the host is the head unit will be described below in detail with reference to FIG. 6.

In contrast, when the electronic device does not receive the vendor-specific request, the electronic device may determine that the host is a PC. In this case, the electronic device may provide a single-configuration for providing only one fixed function according to a mode designated by a user, or may provide a multi-configuration for selectively requesting a specific configuration in the PC. Herein, the configuration means which function is providable, and the multi-configuration supports a plurality of functions that are different in the type and combination of functions included. The number of configurations provided by the device included in the descriptor transmitted in step 313 of FIG. 3 may vary according to which of the single-configuration and the multi-configuration is provided. A specific example of dynamically providing the single-configuration and the multi-configuration will be described below in detail with reference to FIG. 6. When the multi-configuration is provided, the PC requests detailed information about a desired configuration among a plurality of configurations from the electronic device. Accordingly, in the step of analysis 520, the electronic device analyzes the configuration request from the PC.

After analyzing the packets from the host, in the step of conversion 530, the electronic device determines, according to the analysis result, whether the host is a head unit and which configuration information has been requested. Then, the electronic device generates descriptor information according to a current USB mode. Then, the electronic device dynamically converts various interfaces according to the configuration request, and dynamically binds suitable functions according to a host type. Herein, the interface is a driver for providing a relevant function, and at least one interface is required for one function.

Thereafter, in the step of USB enumeration process performing and service providing 540, the electronic device performs the remaining USB enumeration process and provides a service to the host. For example, the remaining USB enumeration process includes a process of transmitting the descriptor information, a process of receiving a Set Configuration request from the host, and a process of enabling an interface corresponding to at least one function included in the selected configuration. Through the above-described process, the electronic device may acquire different interface information according to a host type, and the host may receive an optimized service.

FIG. 6 is a diagram illustrating a method for identifying a head unit according to an exemplary embodiment of the present invention.

Referring to FIG. 6, an electronic device 610 receives a vendor-specific request 650 from a head unit 621. The vendor-specific request has a format of setup data defined in the USB standard. The setup data includes a request type field indicating a request feature, an application field specifying a request content, and at least one field subordinate to the request content. The request type field may be referred to as 'bmRequestType', the application field may be referred to as bRequest', and the at least one field subordinate to the request content may include 'wValue' and 'wIndex'. The setup data may include information about transmission of supplementary data to the head unit 621, and the supplementary information may be transmitted subsequently to the setup data.

According to exemplary embodiments of the present invention, values of the respective fields in the vendor-specific request 650 are set as follows. The 'bmRequestType' may be set to vendor specific request', the 'bRequest' may be set to '0xf0', the 'wValue' may be set to a MirrorLink version, and the 'wIndex' may be set to a vendor ID (Identifier). The MirrorLink is the name of a standard for communication between the head unit 621 and the electronic device 610. Thus, through the 'bmRequestType' value and the 'bRequest' value, the electronic device 610 may determine that the setup data is the vendor-specific request 650.

By receiving the vendor-specific request 650, the electronic device 610 recognizes that a host is a head unit. Accordingly, the electronic device 610 determines that NCM should be used as an Ethernet protocol for a network service rather than RNDIS. Accordingly, the electronic device 610 enables an NCM protocol. According to an exemplary embodiment of the present invention, the electronic device 610 may enable the NCM protocol while maintaining the current connection. According to another exemplary embodiment of the present invention, the electronic device 610 may terminate the connection with the head unit 621, convert to a mode using the NCM protocol, and then re-perform a connection process with the head unit 621.

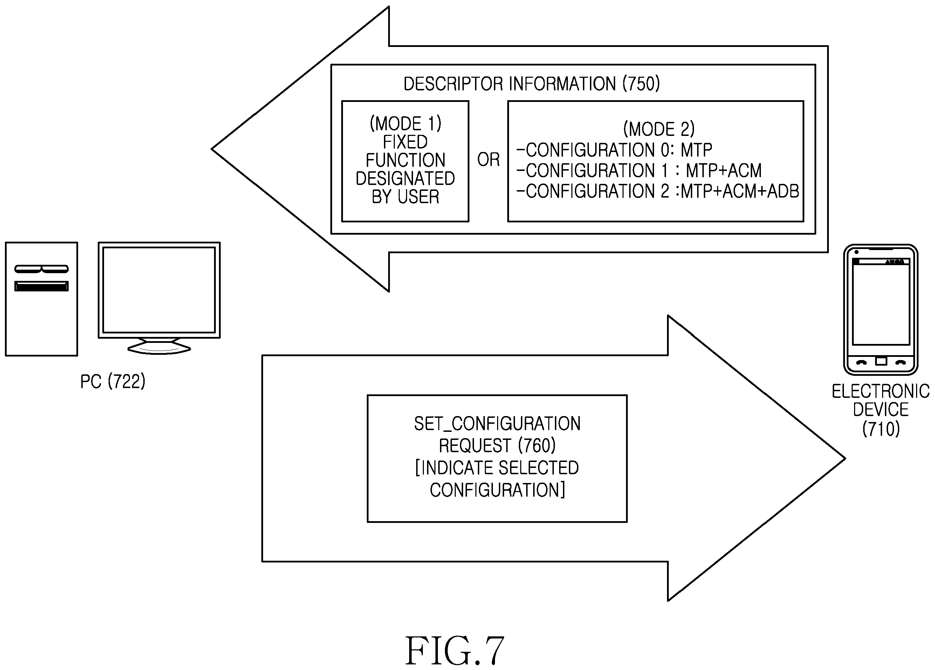

FIG. 7 is a diagram illustrating a method for dynamically providing a single-configuration and a multi-configuration according to an exemplary embodiment of the present invention.

Referring to FIG. 7, an electronic device 710 transmits a descriptor 750 to a PC 722. Herein, information included in the descriptor 750 may vary according to USB modes. It is assumed that a mode 1 provides a single-configuration and a mode 2 provides a multi-configuration. In the mode 1, the descriptor 750 includes information about one fixed function designated by a user. In the mode 2, the descriptor 750 includes a list of a plurality of configurations included in a multi-configuration and information about at least one function included in each configuration. Herein, the information about the function includes a function type and information about a required interface.

According to an exemplary embodiment of the present invention, three configurations are provided in a multi-configuration. The configuration 0 supports Media Transfer Protocol (MTP), the configuration 1 supports MTP and Abstract Control Model (ACM), and the configuration 2 supports MTP, ACM, and Android Debug Bridge (ADB). The MTP is a data transmission function for a portable media device. The ACM is a function of using a USB-connected device as a virtual modem or a virtual communication port. The ADB is a versatile command tool, and is used to connect an Android-based device for debug or other purposes. As illustrated in FIG. 6, the configurations provided in the multi-configuration may be defined to include some functions in common. According to another exemplary embodiment of the present invention, the configurations provided in the multi-configuration may be defined to provide different functions exclusively.

The electronic device 710 receives a Set_Configuration request 760 from the PC 722. The Set_Configuration request 760 includes information indicating a configuration selected in the PC 722. Accordingly, the electronic device 710 and the PC 722 enable an interface corresponding to at least one function included in the selected function, and provide the at least one function.

Although not illustrated in FIG. 7, the electronic device 710 may notify information about the number of configurations provided to the PC 722, before transmitting the descriptor 750 including specific information for each of the configurations. In this case, in the mode 1, the electronic device 710 notifies that only one configuration is provided, and in the mode 2, the electronic device 710 notifies that a plurality of configurations are provided. Thereafter, when the PC 722 transmits a Get_Descriptor request for requesting specific information about at least one configuration, the electronic device 710 transmits specific information about the requested configuration, for example, the descriptor 750 including function and interface information, as illustrated in FIG. 7. Thus, even when the electronic device 710 operates in the multi-configuration mode, when the PC 722 requests information about only one configuration, the descriptor 750 may include information about only one configuration.

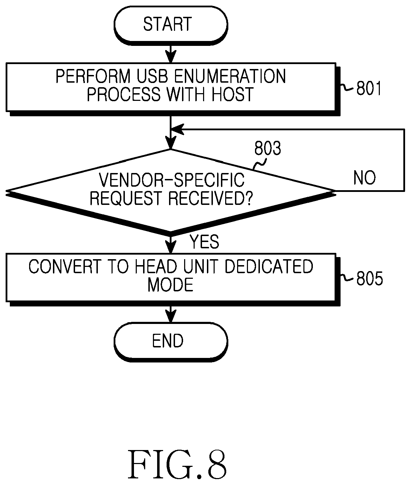

FIG. 8 is a diagram illustrating a process for identifying a head unit according to an exemplary embodiment of the present invention.

Referring to FIG. 8, in step 801, an electronic device performs a USB enumeration process with a host. The USB enumeration process is a process of establishing a state of being able to provide a service to the host, after the electronic device is physically connected to the host. The USB process includes a signal path setting process, a process of checking (e.g., analyzing) a function providable in a device, and a driver operating process.

In step 803, the electronic device determines whether a vendor-specific request is received from the host. The vendor-specific request may be received after completion of the USB enumeration process or during the USB enumeration process. The vendor-specific request has a format of setup data defined in the USB standard, and may be determined through a specific field value in the setup data. For example, in the case of the vendor-specific request, a 'bmRequestType' field of the setup data may be set to vendor specific request', a 'bRequest' field may be set to '0xf0', a 'wValue' field may be set to a MirrorLink version, and a 'wIndex' field may be set to a vendor ID. Thus, through the 'bmRequestType' value and the 'bRequest' value, the electronic device may identify the vendor-specific request. For example, when receiving setup data, the electronic device determines whether at least one field of the setup data has been set to a value corresponding to the head unit. According to an exemplary embodiment of the present invention, if the electronic device determines that a vendor-specific request has not been received from the host, the electronic device continues to poll for receipt of a vendor-specific request. In contrast, if the electronic device determines that a vendor-specific request has been received from the host, the electronic device proceeds to step 805.

When receiving the vendor-specific request, in step 805, the electronic device determines that the host is a head unit of a vehicle, and converts to a head unit dedicated mode. The head unit dedicated mode is an operation mode that is optimized to the interface and the standard required for interworking with the head unit. For example, in comparison with the case of providing a service to a PC, the head unit dedicated mode may use a different Ethernet link driver. The Ethernet link driver is used to provide a network service, and requests an NCM protocol in the case of the head unit. For example, the head unit dedicated mode includes a feature of using an NCM protocol as an Ethernet link driver. According to an exemplary embodiment of the present invention, the head unit dedicated mode may have other differences. According to an exemplary embodiment of the present invention, the electronic device may change only a different configuration while maintaining the current connection with the host. Specifically, the electronic device may enable the NCM protocol. According to an exemplary embodiment of the present invention, the electronic device may terminate the connection with the host, convert to the head unit dedicated mode, and then re-perform a USB enumeration process with the host. In this case, the host recognizes that another device is newly connected.

The method described above in relation with FIG. 8 under of the present invention may be provided as one or more instructions in one or more software modules, or computer programs stored in an electronic device including a portable terminal.

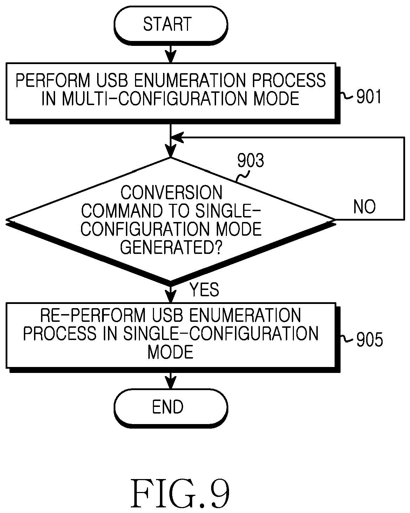

FIG. 9 is a diagram illustrating a process for converting between a multi-configuration and a single-configuration according to an exemplary embodiment of the present invention.

Referring to FIG. 9, in step 901, an electronic device performs a USB enumeration process in a multi-configuration mode. The USB enumeration process is a process of establishing a state of being able to provide a service to the host, after the electronic device is physically connected to the host. The USB process includes a signal path setting process, a process of checking (e.g., analyzing) a function that may be provided in a device, and a driver operating process. In this case, the electronic device operates in a multi-configuration mode. Accordingly, the electronic device provides information about a plurality of configurations to the host. Specifically, in performing a USB enumeration process, the electronic device sets two or more configurations in a descriptor informing the number of configurations provided, and then provides specific information about a configuration selected by the host.

In step 903, the electronic device determines whether a conversion command to a single-configuration mode is generated. The conversion command to a single-configuration mode may be generated after completion of the USB enumeration process, during the USB enumeration process, or before the USB enumeration process. The conversion command is generated by user input. The conversion command may be defined differently according to specific embodiments. According to an exemplary embodiment of the present invention, the conversion command may be defined to execute a specific function providable to the host during the operation in the multi-configuration mode. In this case, when a user executes the specific function during the operation in the multi-configuration mode, the electronic device converts to a single-configuration mode of providing only the specific function executed by the user. For example, execution of one specific function is defined by the conversion command. According to an exemplary embodiment of the present invention, the conversion command may be defined as an input for checking (e.g., analyzing or determining) a mode conversion intention of a user. In this case, the electronic device may perform a process of determining one configuration provided in a single-configuration mode, together with a mode conversion command. According to an exemplary embodiment of the present invention, if the electronic device determines that a conversion command to a single-configuration mode is generated, then the electronic device continues to poll for such a conversion command. In contrast, if the electronic device determines that such a conversion command is generated, then the electronic device proceeds to step 905.

When the mode conversion command is generated, in step 905, the electronic device re-performs a USB enumeration process in the single-configuration mode. In step 901, the host recognizes that the electronic device provides a multi-configuration. Thus, in order for the host to recognize that the electronic device provides a single-configuration, the electronic device re-performs a USB enumeration process in a single-configuration mode. Accordingly, the electronic device provides information about a plurality of configurations to the host. Specifically, in performing a USB enumeration process, the electronic device sets one configuration in a descriptor informing the number of configurations provided. To this end, the electronic device may re-connect after termination of the connection with the host. According to an exemplary embodiment of the present invention, the electronic device may not re-perform the USB enumeration process and may transmit a notification informing the conversion to the single-configuration mode.

According to an exemplary embodiment of the present invention, the electronic device having converted to the single-configuration mode from a multi-configuration mode may re-convert to the multi-configuration mode. For example, when other functions than a specific function provided in the multi-configuration mode are additionally executed, the electronic device converts to the multi-configuration mode. For example, additional execution of another specific function is defined by a conversion command to the multi-configuration mode, and in this case, the multi-configuration mode provides an additionally-executed function together with a function provided in the single-configuration mode. As another example, when an executed specific function is terminated in conversion to the single-configuration mode, the electronic device converts to the multi-configuration mode. In order to convert to the multi-configuration mode, the electronic device may re-perform a USB enumeration process or may transmit a notification informing the conversion to the multi-configuration mode.

The method described above in relation with FIG. 9 under of the present invention may be provided as one or more instructions in one or more software modules, or computer programs stored in an electronic device including a portable terminal.

The present invention may be implemented in an electronic device including a portable terminal such as, for example, a smart phone and a mobile telecommunication terminal. Hereunder, a portable terminal is used as an example for the electronic device.

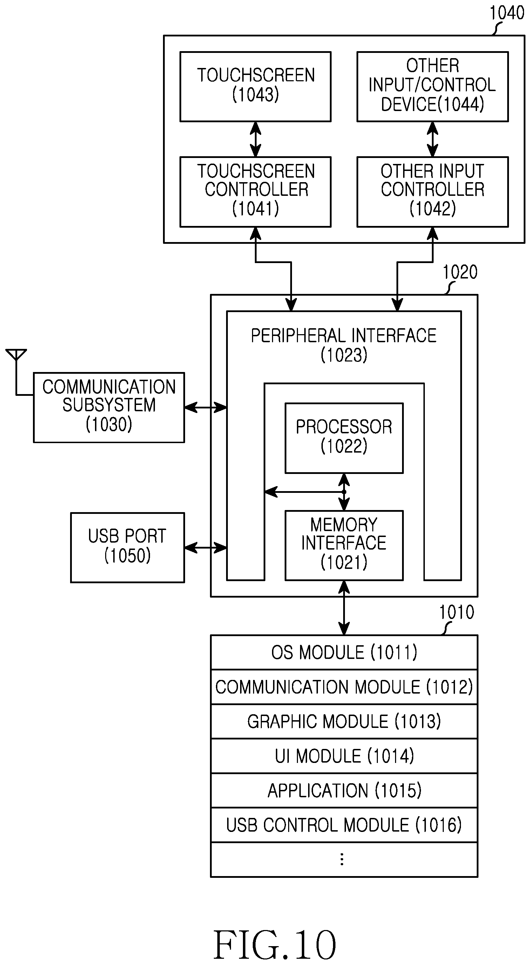

FIG. 10 is a diagram illustrating a block configuration of an electronic device according to an exemplary embodiment of the present invention.

The electronic device includes a memory unit 1010, a processor unit 1020, a communication subsystem 1030, an Input/Output (I/O) subsystem 1040, and a USB port 1050. The elements of the electronic device illustrated in FIG. 10 may be coupled by at least one communication bus (not illustrated) or stream line (not illustrated).

The memory unit 1010 may be connected to a memory interface 1021. The memory unit 1010 may include one or more high-speed random-access memories (RAMs) such as magnetic disk storage devices, one more nonvolatile memories, one or more optical storage devices, and/or one or more flash memories (for example, NAND flash memories or NOR flash memories).

The memory unit 1010 stores at least one software executable by the processor unit 1020. Elements of the software include an Operation System (OS) module 1011, a communication module 1012, a graphic module 1013, a User Interface (UI) module 1014, and one or more application modules 1015. The module that is an element of the software may be represented as a set of instructions, and the module may be referred to as an instruction set or a program. One or more modules including instructions for performing methods according to exemplary embodiments of the present invention may be stored in the memory unit 1010. The OS module 1011 may include at least one software element for controlling a general system operation. For example, the OS module 1011 may be an embedded OS such as WINDOWS, LINUX, Darwin, RTXC, UNIX, OS X, or VxWorks. The communication module 1012 may include at least one software element for performing communication with another electronic device through the communication subsystem 1030, the USB port 1050, or the like. The graphic module 1013 may include at least one software element for providing and displaying graphics on a touchscreen 1043. A UI software module 1014 may include at least one software element related to a user interface. An application 1015 may include at least one application program. The memory unit 1010 may include one or more additional modules in addition to the above-described modules 1011 to 1015. According to an exemplary embodiment of the present invention, one or more of the above-described modules 1011 to 1015 may be excluded.

In particular, according to an exemplary embodiment of the present invention, the memory unit 1010 may store a USB control module 1016. The USB control module 1016 may include at least instruction for causing the electronic device to perform a USB enumeration process with a host, at least one instruction for causing the electronic device to identify a head unit, and at least one instruction for causing the electronic device to convert between a multi-configuration mode and a single-configuration mode. For example, the USB control module 1016 may include at least one instruction for causing the electronic device to operate as illustrated in FIGs. 3, 8 and 9. Functions executed by the USB control module 1016 may be implemented by at least one stream processor, hardware including an Application Specific Integrated Circuit (ASIC), software, or a combination thereof.

The processor unit 1020 may include a memory interface 1021, a processor 1022, and a peripheral interface 1023. The processor 1022 may include at least one hardware chip. In some cases, the entire processor unit 1020 may be referred to as a processor. The memory interface 1021, the processor 1022, and the peripheral interface 1023 may be separate elements, or may be integrated into at least one integrated circuit.

The processor 1022 executes a software program to cause the electronic device to perform a function corresponding to the software program, and performs processes and controls for voice communication and data communication. Also, the processor 1022 performs a specific function corresponding to a relevant module by executing the software module stored in the memory unit 1010. The software module may be referred to as an instruction set. As an example, the processor 1022 performs the methods of the exemplary embodiments of the present invention in cooperation with the software modules stored in the memory unit 1010. The processor 1022 may include at least one data processor and image processor. The data processor and the image processor may be configured as separate hardware elements. Also, the processor 1022 may include a plurality of processors performing different functions.

The peripheral interface 1023 may connect at least one peripheral device and the I/O subsystem 1040 of the electronic device to the processor unit 1020 and the memory unit 1010. The memory unit 1010 may be connected through the memory interface 1021. For example, the memory interface 1021 may provide an interface for accessing the memory unit 1010.

The communication subsystem 1030 provides an interface for wireless communication. The communication subsystem 1030 may include at least one of a Radio Frequency (RF) receiver/transmitter and an optical (e.g., infrared) receiver/transmitter. For example, the wireless communication may be performed according to at least one standard among a Global System for Mobile Communication (GSM) network, an Enhanced Data GSM Environment (EDGE) network, a Code Division Multiple Access (CDMA) network, a W-Code Division Multiple Access (W-CDMA) network, a Long Term Evolution (LTE) network, an Orthogonal Frequency Division Multiple Access (OFDMA) network, a WiFi network, a WiMax network, and a Bluetooth network.

The I/O subsystem 1040 may include a touchscreen controller 1041, another input controller 1042, a touchscreen 1043, and another input/control device 1044.

The touchscreen controller 1041 may be connected to the touchscreen 1043. For example, the touchscreen 1043 and the touchscreen controller 1041 may detect a touch, a motion, or a stop thereof by using multi-touch detection technologies including a proximity sensor array or other elements, as well as capacitive, resistive, infrared and surface acoustic wave technologies for determining one or more touch points on the touchscreen 1043.

The other input controller 1042 may be connected to the other input/control devices 1044. The other input/control device 1044 may include one or more volume up/down buttons. Also, examples of the button may include a push button or rocker button, a rocker switch, a thumb-wheel, a dial, a stick, and a pointer device such as a stylus.

The touchscreen 1043 may provide an I/O interface between the electronic device and the user. As an example, the touchscreen 1043 may transmit a user touch input to the electronic device. Also, the touchscreen 1043 may be a medium that displays the output from the electronic device to the user. For example, the touchscreen 1043 displays a visual output to the user. The visual output may be represented by a text, a graphic, a video, or a combination thereof.

Various display units may be used for the touchscreen 1043. For example, the touchscreen 1043 may include at least one of a Liquid Crystal Display (LCD), a Light Emitting Diode (LED), a Light Emitting Polymer Display (LPD), an Organic Light Emitting Diode (OLED), an Active Matrix Organic Light Emitting Diode (AMOLED), and a Flexible LED (FLED).

The USB port 1050 may provide a physical connection unit for connecting the electronic device to another electronic device according to the USB standard.

The methods according to the exemplary embodiments of the present invention described in the claims and/or specification may be implemented by hardware, software, or a combination thereof.

When the methods are implemented by software, a non-transitory computer-readable storage medium may be provided to store one or more programs (software modules). The one or more programs stored in the computer-readable storage medium may be configured for execution by one or more processors in an electronic device. The one or more programs may include instructions for causing the electronic device to execute the methods according to the exemplary embodiments of the present invention described in the claims and/or specification o.

According to exemplary embodiments of the present invention, these programs (software modules or software) may be stored in Random Access Memories (RAMs), nonvolatile memories including flash memories, Read Only Memories (ROMs), Electrically Erasable Programmable ROMs (EEPROMs), magnetic disc storage devices, Compact Disc-ROMs (CD-ROMs), Digital Versatile Discs (DVDs), other types of optical storage devices, or magnetic cassettes. Also, the programs may be stored in a memory configured by a combination of some or all of such storage devices. Also, each of the memories may be provided in plurality.

Also, the programs may be stored in an attachable storage device that can be accessed by the electronic device through a communication network such as Internet, Intranet, Local Area Network (LAN), wireless LAN (WLAN), or Storage Area Network (SAN), or through a communication network configured by a combination thereof. This storage device may be connected through an external port to the electronic device performing the exemplary embodiments of the present invention. Also, a separate storage device on a communication network may be connected to the electronic device performing the exemplary embodiments of the present invention.

As described above, by analyzing data received from a host, according to exemplary embodiments of the present invention electronic devices can discriminate between a PC and a head unit of a vehicle and dynamically provide a function optimized to the head unit. In addition, unlike the conventional method of fixedly providing one of a single-configuration and a multi-configuration, exemplary embodiments of the present invention can dynamically change the single-configuration and the multi-configuration, thereby making it possible to provide a flexible and effective service.

While the invention has been shown and described with reference to certain exemplary embodiments thereof, it will be understood by those skilled in the art that various changes in form and details may be made therein without departing from the scope of the invention as defined by the appended claims.

## Claims

1. A method of an operation in an electronic device, the method comprising:
receiving (801), from a host device connected to the electronic device through a universal serial bus, USB, setup data comprising a plurality of fields during a USB enumeration process
identifying (803) that each of a request type field and an application field included in the plurality of fields is set to a value indicating that a type of the host device corresponds to a designated type corresponding to a head unit of a vehicle;
enabling, in response to the identifying (803), a first protocol for the USB; and
communicating with the host device through the USB based on the first protocol,
**characterized in that** the method further comprises:
receiving, from another host device connected to the electronic device through the USB, information indicating that the another host device supports a second mode among a plurality of modes included in a USB mode, wherein a first mode among the plurality of modes provides a single-configuration, and wherein the second mode among the plurality of modes provides a multiple-configuration;
setting the USB mode as the second mode indicated by the information;
after setting the USB mode as the second mode, detecting a user input for switching the USB mode to the first mode; and
based on the detection, performing the USB enumeration process with the another host device again to switch the USB mode to the first mode.

2. The method of claim 1, wherein the request type field corresponds to a 'bmRequestType' field, and
wherein the value corresponds to 'vendor specific request'.

3. The method of claim 2, wherein the application field corresponds to a 'bRequest' field,
wherein the application field is set to '0xf0'.

4. The method of claim 3, wherein the first protocol is used for a network control model, NCM.

5. The method of claim 4, wherein a protocol for the USB further comprises a second protocol that is used for a remote network driver interface specification, RNDIS.

6. The method of claim 5, wherein the plurality of fields further include:
a 'wValue' field subordinate to a request content that is specified by the application field; and
a 'wIndex' field subordinate to the request content.

7. The method of claim 6, wherein the multiple-configuration comprises a first configuration for media transfer protocol, MTP, a second configuration for the MTP and abstract control mode, ACM, and a third configuration for the MTP, the ACM, and android debug bridge, ADB.

8. The method of claim 7, wherein the another host device corresponds to a personal computer.

9. An electronic device comprising:
a universal serial bus, USB, port (1050) configured to provide a physical connection unit for performing communication with a host device according to a USB standard;
a memory unit (1021) configured to store at least one software module controlling a USB connection with the host device; and
a processor unit (1022) configured to execute the at least one software module,
wherein the at least one software module comprises at least one instruction for receiving (801), from a host device connected to the electronic device through a USB, setup data comprising a plurality of fields during a USB enumeration process, for identifying (803) that each of request type field and an application field included in the plurality of fields is set to a value indicating that a type of the host device corresponds to a designated type corresponding to a head unit of a vehicle, for enabling, in response to the identifying, a first protocol for the USB, and for communicating with the host device through the USB based on the first protocol, and
**characterized in that** the at least one software module further comprises at least one instruction:
for receiving, from another host device connected to the electronic device through the USB, information indicating that the another host device supports a second mode among a plurality of modes included in a USB mode, wherein a first mode among the plurality of modes provides a single-configuration, and wherein the second mode among the plurality of modes provides a multiple-configuration;
for setting the USB mode as the second mode indicated by the information;
for, after setting the USB mode as the second mode, detecting a user input for switching the USB mode to the first mode; and
for, based on the detection, performing the USB enumeration process with the another host device again to switch the USB mode to the first mode.

10. An electronic device according to claim 9 arranged to, when executed by the processing unit (1022), implement a method of one of claims 2 to 8.

## Patentansprüche

1. Verfahren eines Betriebs in einer elektronischen Vorrichtung, das Verfahren umfassend:
Empfangen (801), von einer Host-Vorrichtung, die mit der elektronischen Vorrichtung durch einen Universal Serial Bus, USB, verbunden ist, von Installationsdaten, die eine Vielzahl von Feldern umfassen, während eines USB-Aufzählungsprozesses, Identifizieren (803), dass jeweils ein Anforderungstypfeld und ein Anwendungsfeld, die in der Vielzahl von Feldern enthalten sind, auf einen Wert eingestellt ist, der angibt, dass ein Typ der Host-Vorrichtung einem festgelegten Typ, der einer Haupteinheit eines Fahrzeugs entspricht, entspricht;
Aktivieren, in Ansprechen auf das Identifizieren (803), eines ersten Protokolls für den USB; und Kommunizieren mit der Host-Vorrichtung durch den USB basierend auf dem ersten Protokoll,
**dadurch gekennzeichnet, dass** das Verfahren ferner umfasst:
Empfangen, von einer weiteren Host-Vorrichtung, die mit der elektronischen Vorrichtung durch den USB verbunden ist, von Informationen, die angeben, dass die weitere Host-Vorrichtung einen zweiten Modus aus einer Vielzahl von Moden, die in einem USB-Modus enthalten sind, unterstützt, wobei ein erster Modus aus der Vielzahl von Moden eine Einzelkonfiguration bereitstellt, und wobei der zweite Modus aus der Vielzahl von Moden eine Mehrfachkonfiguration bereitstellt;
Einstellen des USB-Modus als den zweiten Modus, der durch die Informationen angegeben wird;
nach dem Einstellen des USB-Modus als den zweiten Modus, Erfassen einer Benutzereingabe zum Schalten des USB-Modus in den ersten Modus; und
basierend auf der Erfassung, Durchführen des USB-Aufzählungsprozesses wiedermit der weiteren Host-Vorrichtung, um den USB-Modus in den ersten Modus zu schalten.

2. Verfahren nach Anspruch 1, wobei das Anforderungstypfeld einem "bmAnforderungstyp"-Feld entspricht, und
wobei der Wert "anbieterspezifische Anforderung" entspricht.

3. Verfahren nach Anspruch 2, wobei das Anwendungsfeld einem "bAnforderung"-Feld entspricht,
wobei das Anwendungsfeld auf "0xf0" eingestellt ist.

4. Verfahren nach Anspruch 3, wobei das erste Protokoll für ein Netzwerksteuerungsmodell, NCM, verwendet wird.

5. Verfahren nach Anspruch 4, wobei ein Protokoll für den USB ferner ein zweites Protokoll umfasst, das für eine Entferntes-Netzwerk-Treiberschnittstellenspezifikation, RNDIS, verwendet wird.

6. Verfahren nach Anspruch 5, wobei die Vielzahl von Feldern ferner enthält:
ein "wWert"-Feld, das einem Anforderungsinhalt untergeordnet ist, der durch das Anwendungsfeld spezifiziert wird; und
ein "wIndex"-Feld, das dem Anforderungsinhalt untergeordnet ist.

7. Verfahren nach Anspruch 6, wobei die Mehrfachkonfiguration eine erste Konfiguration für ein Medienübertragungsprotokoll, MTP, eine zweite Konfiguration für das MTP und einen abstrakten Steuermodus, ACM, und eine dritte Konfiguration für das MTP, den ACM und eine Android Debug Bridge, ADB, umfasst.

8. Verfahren nach Anspruch 7, wobei die weitere Host-Vorrichtung einem Personalcomputer entspricht.

9. Elektronische Vorrichtung, umfassend:
einen Universal Serial Bus, USB,-Anschluss (1050), der konfiguriert ist, um eine physikalische Verbindungseinheit zum Durchführen von Kommunikation mit einer Host-Vorrichtung gemäß einem USB-Standard bereitzustellen;
eine Speichereinheit (1021), die konfiguriert ist, um mindestens ein Softwaremodul zu speichern, das eine USB-Verbindung mit der Host-Vorrichtung steuert; und
eine Prozessoreinheit (1022), die konfiguriert ist, um das mindestens eine Softwaremodul auszuführen,
wobei das mindestens eine Softwaremodul mindestens eine Anweisung zum Empfangen (801), von einer Hostvorrichtung, die mit der elektronischen Vorrichtung durch einen USB verbunden ist, von Installationsdaten, die eine Vielzahl von Feldern umfassen, während eines USB-Aufzählungsprozesses, zum Identifizieren (803), dass jeweils ein Anforderungstypfeld und ein Anwendungsfeld, die in der Vielzahl von Feldern enthalten sind, auf einen Wert eingestellt ist, der angibt, dass ein Typ der Host-Vorrichtung einem festgelegten Typ, der einer Haupteinheit eines Fahrzeugs entspricht, entspricht, zum Aktivieren, in Ansprechen auf das Identifizieren, eines ersten Protokolls für den USB und zum Kommunizieren mit der Host-Vorrichtung durch den USB basierend auf dem ersten Protokoll umfasst, und
**dadurch gekennzeichnet, dass**
das mindestens eine Softwaremodul ferner mindestens eine Anweisung umfasst:
zum Empfangen, von einer weiteren Host-Vorrichtung, die mit der elektronischen Vorrichtung durch den USB verbunden ist, von Informationen, die angeben, dass die weitere Host-Vorrichtung einen zweiten Modus aus einer Vielzahl von Moden, die in einem USB-Modus enthalten sind, unterstützt, wobei ein erster Modus aus der Vielzahl von Moden eine Einzelkonfiguration bereitstellt, und wobei der zweite Modus aus der Vielzahl von Moden eine Mehrfachkonfiguration bereitstellt;
zum Einstellen des USB-Modus als den zweiten Modus, der durch die Informationen angegeben wird;
nach dem Einstellen des USB-Modus als den zweiten Modus, zum Erfassen einer Benutzereingabe zum Schalten des USB-Modus in den ersten Modus; und
basierend auf der Erfassung, zum Durchführen des USB-Aufzählungsprozesses wieder mit der weiteren Host-Vorrichtung, um den USB-Modus in den ersten Modus zu schalten.

10. Elektronische Vorrichtung nach Anspruch 9, die angeordnet ist, um, wenn sie durch die Verarbeitungseinheit (1022) ausgeführt wird, ein Verfahren nach einem der Ansprüche 2 bis 8 zu implementieren.

## Revendications

1. Procédé d'un fonctionnement dans un dispositif électronique, le procédé comprenant :
la réception (801), de la part d'un dispositif hôte connecté au dispositif électronique via un bus série universel, USB, de données de paramétrage comprenant une pluralité de champs pendant un processus d'énumération USB,
l'identification (803) que chacun parmi un champ de type de requête et un champ d'application compris dans la pluralité de champs est réglé à une valeur indiquant qu'un type du dispositif hôte correspond à un type désigné correspondant à une unité de tête d'un véhicule ;
la validation, en réponse à l'identification (803), d'un premier protocole pour l'USB ; et
la communication avec le dispositif hôte via l'USB sur la base du premier protocole,
**caractérisé en ce que** le procédé comprend en outre :
la réception, de la part d'un autre dispositif hôte connecté au dispositif électronique via l'USB, d'une information indiquant que l'autre dispositif hôte supporte un deuxième mode parmi une pluralité de modes compris dans un mode USB, dans lequel un premier mode parmi la pluralité de modes fournit une configuration unique, et dans lequel le deuxième mode parmi la pluralité de modes fournit une configuration multiple ;
le réglage du mode USB en tant que deuxième mode indiqué par l'information ;
après le réglage du mode USB en tant que deuxième mode, la détection d'une entrée utilisateur pour faire passer le mode USB au premier mode ; et
sur la base de la détection, réaliser de nouveau le processus d'énumération USB avec l'autre dispositif hôte pour faire passer le mode USB au premier mode.

2. Procédé selon la revendication 1, dans lequel le champ de type de requête correspond à un champ 'bmRequestType', et
dans lequel la valeur correspond à une "vendor specific request'.

3. Procédé selon la revendication 2, dans lequel le champ d'application correspond à un champ 'bRequest',
dans lequel le champ d'application est réglé à '0xf0'.

4. Procédé selon la revendication 3, dans lequel le premier protocole est utilisé pour un modèle de contrôle de réseau, NCM.

5. Procédé selon la revendication 4, dans lequel un protocole pour l'USB comprend en outre un deuxième protocole utilisé pour une spécification d'interface de pilote de réseau distant, RNDIS.

6. Procédé selon la revendication 5, dans lequel la pluralité de champs comprennent en outre :
un champ 'wValue' subordonné à un contenu de requête qui est spécifié par le champ d'application ; et
un champ 'windex' subordonné au contenu de requête.

7. Procédé selon la revendication 6, dans lequel la configuration multiple comprend une première configuration pour un protocole de transfert de médias, MTP, une deuxième configuration pour le MTP et un mode de contrôle abstrait, ACM, et une troisième configuration pour le MTP, l'ACM, et un pont de débogage android, ADB.

8. Procédé selon la revendication 7, dans lequel l'autre dispositif hôte correspond à un ordinateur personnel.

9. Dispositif électronique comprenant :
un port de bus série universel, USB, (1050) configuré pour fournir une unité de connexion physique pour effectuer une communication avec un dispositif hôte selon un standard USB ;
une unité de mémoire (1021) configurée pour stocker au moins un module logiciel contrôlant une connexion USB avec le dispositif hôte ; et
une unité de traitement (1022) configurée pour exécuter l'au moins un module logiciel,
dans lequel l'au moins un module logiciel comprend au moins une instruction pour recevoir (801), de la part d'un dispositif hôte connecté au dispositif électronique via un USB, des données de paramétrage comprenant une pluralité de champs pendant un processus d'énumération USB, pour identifier (803) que chacun parmi le champ de type de requête et un champ d'application compris dans la pluralité de champs est réglé à une valeur indiquant qu'un type du dispositif hôte correspond à un type désigné correspondant à une unité de tête d'un véhicule, pour valider, en réponse à l'identification, un premier protocole pour l'USB, et pour communiquer avec le dispositif hôte via l'USB sur la base du premier protocole, et
**caractérisé en ce que** l'au moins un module logiciel comprend en outre au moins une instruction :
pour recevoir, de la part d'un autre dispositif hôte connecté au dispositif électronique via l'USB, de l'information indiquant que l'autre dispositif hôte supporte un deuxième mode parmi une pluralité de modes compris dans un mode USB, dans lequel un premier mode parmi la pluralité de modes fournit une configuration unique, et dans lequel le deuxième mode parmi la pluralité de modes fournit une configuration multiple ;
pour régler le mode USB en tant que le deuxième mode indiqué par l'information ;
pour, après le réglage du mode USB en tant que deuxième mode, détecter une entrée utilisateur pour faire passer le mode USB au premier mode ; et
pour, sur la base de la détection, réaliser de nouveau le processus d'énumération USB avec l'autre dispositif hôte pour faire passer le mode USB au premier mode.

10. Dispositif électronique selon la revendication 9, étudié pour, lorsque exécuté par l'unité de traitement (1022), implémenter un procédé selon l'une des revendications 2 à 8.
